# EUROPÄISCHE PATENTANMELDUNG

(11) **EP 3 982 467 A1**
(43) Veröffentlichungstag der Anmeldung: **13.04.2022**
(21) Anmeldenummer: 20200674.8
(22) Anmeldetag: 08.10.2020
(51) Int. Cl.: H01M 50/00

(54) **AKKUMULATOR MIT AEROGEL-SCHUBLADE**

(71) Anmelder: Hilti Aktiengesellschaft, 9494 Schaan (LI)
(72) Erfinder: Möhlmann, Alwin, 86857 Hurlach (DE); Wang, Si, 86836 Untermeitingen (DE); Camous, Nathalie, 33098 Paderborn (DE); Isopp, Simone, 86316 Friedberg (DE); Stanger, Robert, 87600 Kaufbeuren (DE)
(74) Vertreter: Hilti Aktiengesellschaft Corporate Intellectual Property

(57) **Zusammenfassung**

Akkumulator enthaltend ein Gehäuse, wenigstens eine erste und zweite Energiespeicherzelle sowie eine Steuerungseinrichtung. In einem Innenraum des Gehäuses ist ein Aerogel enthalten, wobei das Aerogel wenigstens eine erste Aussparung zur Aufnahme der wenigstens ersten Energiespeicherzelle und wenigstens eine zweite Aussparung zur Aufnahme der wenigstens zweiten Energiespeicherzelle enthält.

## Beschreibung

Die vorliegende Erfindung betrifft einen Akkumulator enthaltend ein Gehäuse, wenigstens eine erste und zweite Energiespeicherzelle sowie eine Steuerungseinrichtung.

Aus dem Stand der Technik sind Akkumulatoren als Energiespeicher weitestgehend bekannt.

Für gewöhnlich sind moderne Akkumulatoren, insbesondere Akkumulatoren basierend auf einer Lithium-Ionen-Technologie, relativ robust und widerstandsfähig sind. Probleme können jedoch entstehen aufgrund einer unzureichenden Kühlung der in dem Akkumulator enthaltenden Energiespeicherzelle. Des Weiteren können Stöße oder Schläge, die auf das Gehäuse des Akkumulators einwirken ebenfalls zu Problemen bzw. zu einer Beschädigung des Akkumulators führen. Mechanische Einwirkungen, wie beispielsweise Stöße oder Schläge, können aufgrund eines Sturzes des Akkumulators aus einer großen Höhe oder aber auch aufgrund einer Misshandlung des Akkumulators (wie z.B. Verwendung des Akkumulators als Hammer) entstehen.

Wegen der in Lithium-Ionen-Akkumulatoren erzeugten Wärme kann es bei einer unzureichenden Kühlung zu einem sogenannten thermischen Durchgehen oder auch zu einem "Thermal Runaway" kommen, bei dem eine exotherme chemische Reaktion innerhalb der Energiespeicherzellen zu einem unkontrollierten Überhitzen und dauerhaften Beschädigung des Akkumulators führen kann. Neben der Beschädigung von normal funktionierenden Energiespeicherzellen durch fehlerhafte Energiespeicherzellen kann auch die oftmals empfindliche Steuerungseinrichtung durch die von den fehlerhaften Energiespeicherzellen verursachte Wärme beschädigt werden.

Die thermischen und/oder mechanischen Einflüsse auf den Akkumulator können zu einer ungewollten chemischen Reaktion innerhalb der Energiespeicherzellen führen, die wiederum in einem Druckanstieg und Aufschwellen der Energiespeicherzellen resultiert. Das wegen des Druckanstiegs erzeugte Anschwellen wird auch "swelling" genannt und verursacht eine dauerhafte Beschädigung des Akkumulators.

Aufgabe der vorliegenden Erfindung ist es daher, einen Akkumulator für eine Werkzeugmaschine enthaltend ein Gehäuse, wenigstens eine erste und zweite Energiespeicherzelle sowie eine Steuerungseinrichtung bereitzustellen, der wenigstens die vorstehend genannten Probleme löst. Die Aufgabe wird jeweils gelöst durch den Gegenstand des unabhängigen Anspruchs 1. Weitere vorteilhafte Ausgestaltungsformen der Erfindung finden sich in den entsprechenden Unteransprüchen.

Die Aufgabe wird insbesondere gelöst durch einen Akkumulator für eine Werkzeugmaschine enthaltend ein Gehäuse, wenigstens eine erste und zweite Energiespeicherzelle sowie eine Steuerungseinrichtung.

Erfindungsgemäß ist vorgesehen, dass in einem Innenraum des Gehäuses ein Aerogel enthalten ist, wobei das Aerogel eine Aussparung zur Aufnahme der wenigstens ersten und zweiten Energiespeicherzelle enthält. Durch die isolierende Eigenschaft des Aerogels können normal funktionierende Energiespeicherzellen vor zu großer Wärme, die durch fehlerhafte Energiespeicherzellen erzeugt wird, geschützt werden. Darüber hinaus kann auch die Steuerungseinrichtung vor der Wärme der Energiespeicherzellen geschützt werden. Des Weiteren kann durch die hohe Festigkeit bzw. Druck- und Zugfestigkeit des Aerogels dem Druckaufbau und Anschwellen fehlerhafter Energiespeicherzellen entgegengewirkt werden. Ferner können durch die hohe Festigkeit des Aerogels die Energiespeicherzellen geschützt werden, falls der Akkumulator eine mechanische Belastung in Form von Stößen und/oder Schlägen erfährt.

Der Akkumulator kann insbesondere zur Versorgung einer elektrischen Werkzeugmaschine mit elektrischer Energie verwendet werden. Der Akkumulator sowie die Werkzeugmaschine werden hierzu wiederlösbar miteinander elektrischen verbunden.

Gemäß einer vorteilhaften Ausführungsform der vorliegenden Erfindung kann es möglich sein, dass das Aerogel eine Wärmeleitfähigkeit von 0,0145 bis 0,15 W/mK, insbesondere von 0,008 W/mK, aufweist.

Entsprechend einer vorteilhaften Ausführungsform der vorliegenden Erfindung kann es möglich sein, dass das Aerogel eine Zugfestigkeit von 0,2 bis 6,2 MPa, insbesondere von 3,2 MPa, aufweist.

Gemäß einer vorteilhaften Ausführungsform der vorliegenden Erfindung kann es möglich sein, das Aerogel eine Druckfestigkeit von 0,44 bis 7,5 MPa, insbesondere von 4,0 MPa, aufweist.

Entsprechend einer weiteren vorteilhaften Ausführungsform der vorliegenden Erfindung kann es möglich sein, dass das Aerogel ein Kompressionsmodul von 10 bis 215 MPa, insbesondere von 112,5 MPa, aufweist.

Gemäß einer vorteilhaften Ausführungsform der vorliegenden Erfindung kann es möglich sein, das Aerogel wenigstens eine Aussparung an einer Seitenfläche enthält. Bei der Seitenfläche kann es sich um die Oberseite des Aerogels handeln. Hierdurch kann zum einen Wärme aus dem Aerogel ausströmen und zum anderen im Falle eines Druckanstiegs und Anschwellens der Energiespeicherzellen eine kontrollierte Verformung der Energiespeicherzellen ermöglicht werden.

Entsprechend einer weiteren vorteilhaften Ausführungsform der vorliegenden Erfindung kann es möglich sein, dass die Energiespeicherzellen als Pouch-Zellen ausgestaltet sind. Die Pouch-Zellen können dabei auch als Pouch-Bag-Zellen oder Coffee-Bag-Zellen bezeichnet werden. Durch die flexible Außenhülle der Pouch-Zellen kann eine bessere Kontaktierung der Oberfläche der Pouch-Zelle mit der Oberfläche des Aerogels erreicht werden, wodurch eine verbessere Wärmeleitfähigkeit von den Pouch-Zellen zum Aerogel erreicht werden kann.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine seitliche Schnittansicht auf einen erfindungsgemäßen Akkumulator;
- Figur 2: eine Explosionsansicht auf den Akkumulator mit einem Gehäuse, einer Anzahl an Energiespeicherzellen, der Steuerungseinrichtung sowie dem Aerogel;
- Figur 3: eine perspektivische Ansicht auf das Aerogel mit einer Anzahl an Energiespeicherzellen und einer Steuerungseinrichtung;

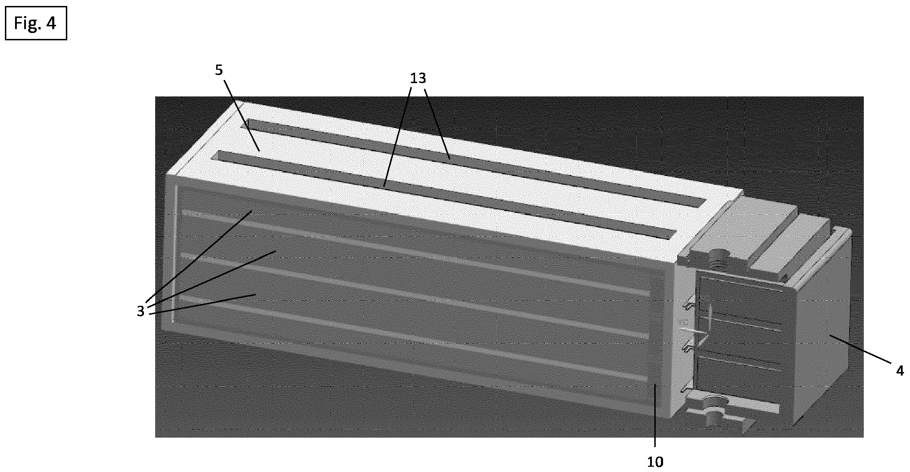

- Figur 4: eine weitere seitliche Schnittansicht auf das Aerogel mit den Energiespeicherzellen und der Steuerungseinrichtung; und
- Figur 5: eine perspektivische Ansicht auf die Energiespeicherzellen außerhalb des Aerogels.

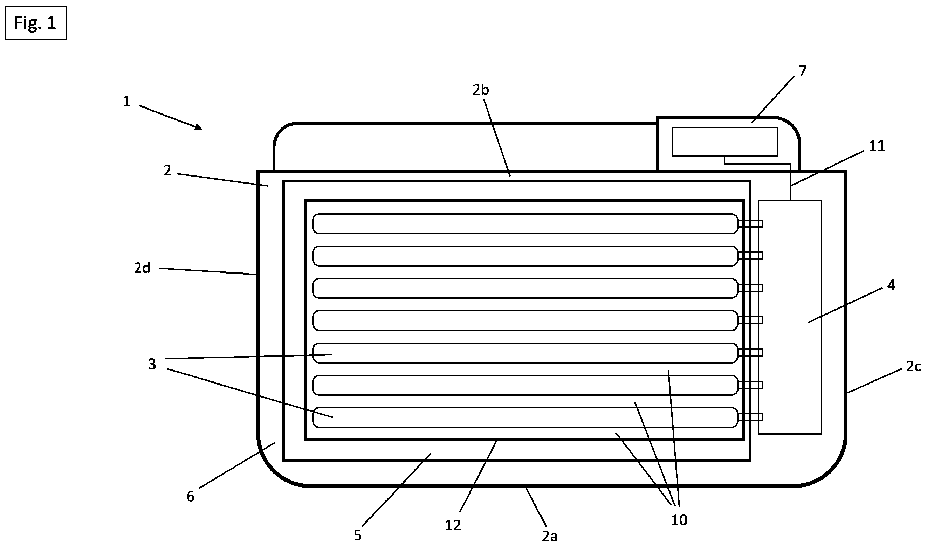

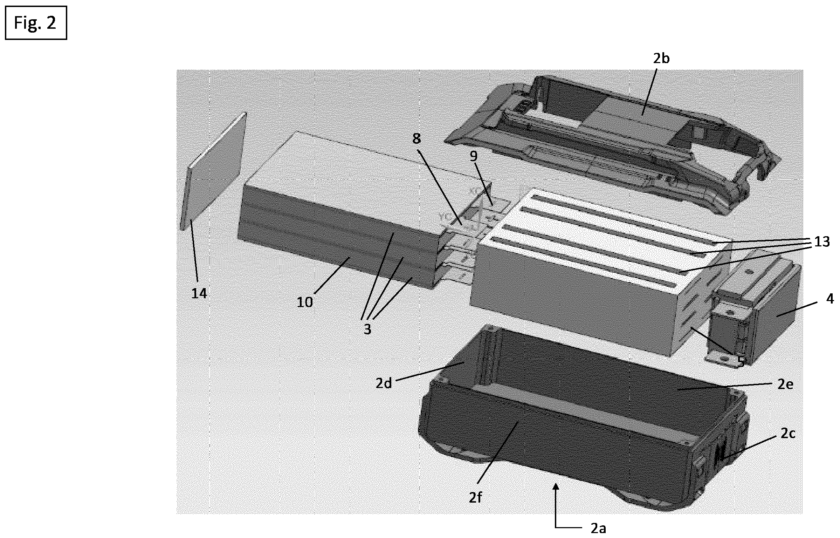

In Figur 1 ist ein erfindungsgemäßer Akkumulator 1 in einem zusammengebauten Zustand gezeigt. Figur 2 zeigt hingegen die wesentlichen Komponenten des Akkumulators 1.

Der Akkumulator 1 kann unter anderem zur Versorgung einer elektrischen Werkzeugmaschine mit elektrischer Energie verwendet werden. Hierzu wird der Akkumulator 1 wiederlösbar mit der Werkzeugmaschine verbunden. Bei der Werkzeugmaschine kann es sich um eine Bohrmaschine, einen Bohrhammer, eine Säge, eine Schleifgerät oder dergleichen handeln.

Die Werkzeugmaschine ist in den Figuren nicht dargestellt.

Wie in Figur 1 und insbesondere in Figur 2 gezeigt enthält der Akkumulator 1 im Wesentlichen ein Gehäuse 2, eine Anzahl an Energiespeicherzellen 3, eine Steuerungseinrichtung 4 sowie ein Aerogel 5.

Das Gehäuse 2 besteht aus einem Polyamid und enthält eine Unterseite 2a, Oberseite 2b, Vorderseite 2c, Rückseite 2d, linke Seite 2e und rechte Seite 2f. Alternativ kann für das Gehäuse 2 auch ein anderes Polymer als Polyamid verwendet werden. Wie in den Figuren 1 und 2 gezeigt entsteht durch das Zusammenfügen der sechs Seitenelemente 2a - 2f ein quaderförmiges Gebilde mit einem Innenraum 6 innerhalb des Akkumulators 1. Der Innenraum 6 kann auch als Volumen oder Hohlraum bezeichnet werden. Wie nachfolgend beschrieben dient der Innenraum 6 zur Aufnahme der Energiespeicherzellen 3, des Aerogels 5 sowie der Steuerungseinrichtung 4. Wie in Figur 1 und 2 gezeigt ist an der Oberseite 2b des Gehäuses 2 eine Schnittstellenvorrichtung 7 positioniert. Die Schnittstellenvorrichtung 7 dient zum wiederlösbaren Verbinden des Akkumulators 1 mit einer Werkzeugmaschine zur Abgabe elektrischer Energie (Entladen) oder mit einem Ladegerät zum Aufnehmen elektrischer Energie (Aufladen).

Das Ladegerät ist ebenfalls nicht in den Figuren gezeigt.

Die Energiespeicherzellen 3 sind in dem vorliegenden Ausführungsbeispiel als flache Pouch-Zellen mit einer Lithium-Ionen-Technologie ausgebildet. Des Weiteren enthält jede Energiespeicherzelle 3 eine Unterseite 3a, Oberseite 3b, Vorderseite 3c, Rückseite 3d, linke Seite 3e und rechte Seite 3f.

Wie in Figur 1 und 2 gezeigt weist jede Energiespeicherzelle 3 an der Vorderseite 3c jeweils einen Pluspol 8 und Minus-Pol 9 auf. Die Plus- und Minus-Pole 8, 9 können auch als Plus- und Minuskontakte bzw. als Anode und Kathode bezeichnet werden. Mit Hilfe der Pole 8, 9 kann elektrische Energie zu und von den Energiespeicherzellen 3 strömen.

Gemäß einer speziellen Ausgestaltung sind die einzelnen Energiespeicherzellen 3 mit einem Kunststoff übergossen, vgl. Figur 1 und 2. Der Verguss 10 von Kunststoff um die Energiespeicherzellen wird auch als Potting bezeichnet und dient dem Schutz der Energiespeicherzellen 3 vor mechanischen Einflüssen. Darüber hinaus kann das Potting 10 auch zu einer Wärmeleitfähigkeit an der Oberfläche der Energiespeicherzelle 3 führen.

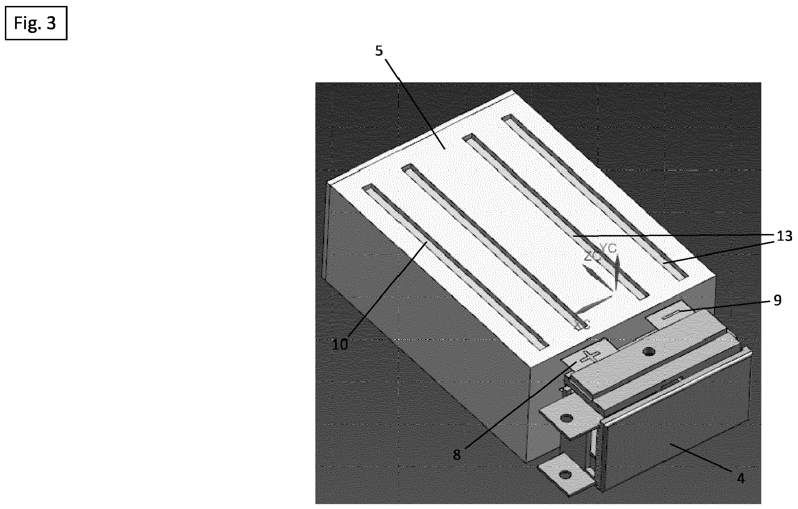

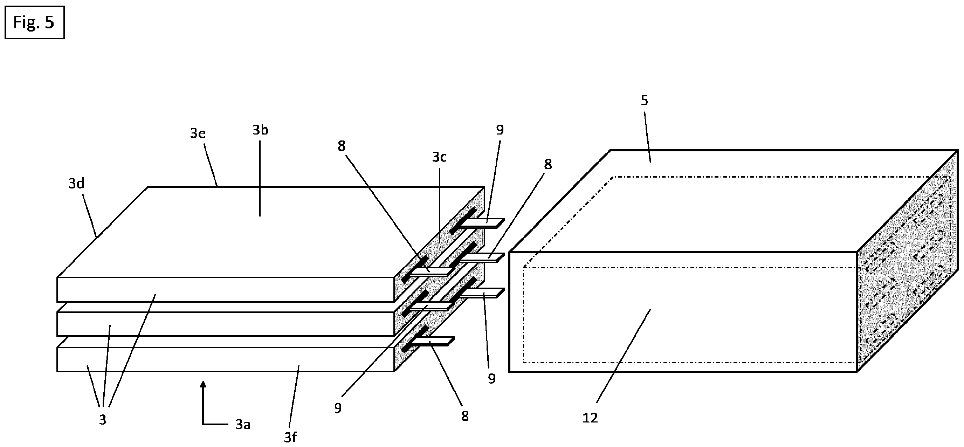

Wie insbesondere in den Figuren 1, 2, 3 und 5 gezeigt ist die Steuerungseinrichtung 4 mit den jeweiligen Plus- und Minus-Polen 8, 9 der einzelnen Energiespeicherzellen 3 verbunden. Die Steuerungseinrichtung 4 überwacht, steuert und regelt Funktionen der Energiespeicherzellen 3 und kann auch als Akkusteuerung oder Cell Management System (CMS) bezeichnet werden. Insbesondere die Abgabe und Aufnahme elektrischer Energie von und zu den Energiespeicherzellen 3 wird durch die Steuerungseinrichtung 4 geregelt und überwacht. Die Steuerungseinrichtung 4 steht mit der Schnittstellenvorrichtung 7 über Leitungen 11 in Verbindung.

Bei dem im Ausführungsbeispiel verwendete Aerogel 5 handelt es sich um einen hochporösen Festkörper, bei denen bis zu 99,98 % des Volumens aus Poren bestehen. Das in dem Ausführungsbeispiel verwendete Aerogel 5 beruht auf einer Silicatbasis. Alternativ kann das Aerogel 5 auch auf einer Kunststoff- oder Kohlenstoffbasis beruhen. Grundsätzlich können alle Metalloxide, Polymere und einige andere Stoffe als Ausgangsbasis für das Aerogel 5 bzw. die Aerogelsynthese mittels eines Sol-Gel-Prozesses verwendet werden. Der Sol-Gel-Prozess ist ein Verfahren zur Herstellung nichtmetallischer anorganischer oder hybridpolymerer Materialien aus kolloidalen Dispersionen, den sogenannten Solen (abgeleitet vom englischen "solution" für Lösung).

Wie in Figuren dargestellt enthält das Aerogel eine Aussparung 12 zur Aufnahme der Energiespeicherzellen 3. Die Größe bzw. das Volumen der Aussparung 12 entspricht der Größe bzw. dem Volumen der Energiespeicherzellen 3 bzw. einer Gruppierung an Energiespeicherzellen 3.

Des Weiteren enthält das Aerogel 5 eine Anzahl an Aussparungen 13 an der Oberseite des Aerosols 5. Die Aussparung 13 dient zum Ausströmen von Wärme aus dem Aerosol 5 sowie zum Ausdehnen der Energiespeicherzellen 3 bei einem möglichen Anschwellen.

Wenn die Energiespeicherzellen 3 in die Aussparung 12 des Aerogels 5 positioniert sind, ragen die Plus- und Minuspole 8, 9 an der Seite aus dem Aerogel 5 heraus, die der Steuerungseinrichtung 4 zugewandt ist, vgl. Figur 1, 3 und 5. Dadurch, dass die Plus- und Minuspole 8, 9 aus dem Aerogel 5 herausragen, können diese mit der Steuerungseinrichtung 4 verbunden werden.

Zum Positionieren der einzelnen Energiespeicherzellen 3 im Inneren des Aerogels 5 enthält das Aerogel 5 eine lösbare bzw. annehmbare Rückseite 14 in Form eines Deckels, vgl. Figur 2.

Zur Montage des Akkumulators 1 wird die als Deckel ausgestaltete Rückseite 14 des Aerogels 5 von dem Aerogel 5 genommen. Die einzelnen Energiespeicherzellen 3 werden in das Innere des Aerogels 5 positioniert. Wie vorstehend bereits beschrieben ragen die Plus- und Minuspole 8, 9 der Energiespeicherzellen 3 aus dem Aerogel 5 heraus und werden mit der Steuerungseinrichtung 4 verbunden. Die als Deckel ausgestaltete Rückseite 14 des Aerogels 5 wird stoffförmig mit Hilfe eines Klebstoffs mit dem Aerogel 5 verbunden. Es ist jedoch auch möglich, dass die Rückseite 14 des Aerogels 5 pass- bzw. kraftförmig mit dem Aerogel 5 verbunden wird.

Das Aerogel 5 mit den Energiespeicherzellen 3 und der Steuerungseinrichtung 4 wird in das Innere des Gehäuses 2 positioniert.
- 1: Akkumulator
- 2: Gehäuse des Akkumulators
- 2a: Unterseite
- 2b: Oberseite
- 2c: Vorderseite
- 2d: Rückseite
- 2e: linke Seite
- 2f: rechte Seite
- 3: Energiespeicherzellen
- 3a: Unterseite
- 3b: Oberseite
- 3c: Vorderseite
- 3d: Rückseite
- 3e: linke Seite
- 3f: rechte Seite
- 4: Steuerungseinrichtung
- 5: Aerogel
- 6: Innenraum innerhalb des Akkumulators
- 7: Schnittstellenvorrichtung
- 8: Pluspol
- 9: Minuspol
- 10: Verguss / Potting
- 11: Leitungen
- 12: Aussparung für Energiespeicherzellen
- 13: Aussparungen an Oberseite des Aerogels
- 14: Rückseite des Aerogels

## Patentansprüche

1. Akkumulator (1) enthaltend ein Gehäuse (2), wenigstens eine erste und zweite Energiespeicherzelle (3) sowie eine Steuerungseinrichtung (4)
**dadurch gekennzeichnet, dass** in einem Innenraum (6) des Gehäuses (2) ein Aerogel (5) enthalten ist, wobei das Aerogel (5) eine Aussparung (12) zur Aufnahme der wenigstens ersten und zweiten Energiespeicherzelle (3) enthält.

2. Akkumulator (1) nach Anspruch 1,
**dadurch gekennzeichnet, dass** das Aerogel (5) eine Wärmeleitfähigkeit von 0,0145 bis 0,15 W/mK, insbesondere von 0,008 W/mK, aufweist.

3. Akkumulator (1) nach Anspruch 1 oder 2,
**dadurch gekennzeichnet, dass** das Aerogel (5) eine Zugfestigkeit von 0,2 bis 6,2 MPa, insbesondere von 3,2 MPa, aufweist.

4. Akkumulator (1) nach wenigstens einem der Ansprüche 1 bis 3,
**dadurch gekennzeichnet, dass** das Aerogel (5) eine Druckfestigkeit von 0,44 bis 7,5 MPa, insbesondere von 4,0 MPa, aufweist.

5. Akkumulator (1) nach wenigstens einem der Ansprüche 1 bis 4,
**dadurch gekennzeichnet, dass** das Aerogel (5) ein Kompressionsmodul von 10 bis 215 MPa, insbesondere von 112,5 MPa, aufweist.

6. Akkumulator (1) nach wenigstens einem der Ansprüche 1 bis 5,
**dadurch gekennzeichnet, dass** das Aerogel (5) wenigstens eine Aussparung (13) an einer Seitenfläche enthält.

7. Akkumulator (1) nach wenigstens einem der Ansprüche 1 bis 6,
**dadurch gekennzeichnet, dass** die Energiespeicherzellen (3) als Pouch-Zellen ausgestaltet sind.
